# EUROPEAN PATENT APPLICATION

(11) **EP 4 095 847 A1**
(43) Date of publication of application: **30.11.2022**
(21) Application number: 22164037.8
(22) Date of filing: 24.03.2022
(51) Int. Cl.: G10L 15/01, G06F 40/232, G06F 40/247, G06F 40/279, G10L 13/08

(54) **METHOD AND APPARATUS FOR PROCESSING VOICE RECOGNITION RESULT, ELECTRONIC DEVICE, AND COMPUTER MEDIUM**

(30) Priority: 25.05.2021 CN 202110573467
(71) Applicant: Apollo Intelligent Connectivity (Beijing) Technology Co., Ltd., Beijing 100176 (CN)
(72) Inventor: LIU, Rong, Beijing 100176 (CN)
(74) Representative: Gill Jennings & Every LLP

(57) **Abstract**

The present disclosure provides a method and apparatus for processing a voice recognition result, relates to the technical fields of Internet of Vehicles, smart cabins, voice recognition and the like. An implementation is: acquiring push text data corresponding to push information; expanding the push text data to obtain expanded push data; acquiring recognized text data output by a voice assistant, the recognized text data being obtained by performing voice recognition on a voice of a user reading the push information; and in response to determining that the recognized text data matches the expanded push data, determining that the recognized text data hits the push information.

## Description

### TECHNICAL FIELD

The present invention relates to the technical field of data processing, in particular to the technical fields of Internet of Vehicles, smart cabins, voice recognition and the like, and more particular to a method and apparatus for processing a voice recognition result, an electronic device, a computer readable medium, and a computer program product.

### BACKGROUND

"Anything you see can be controlled by voice" means that, in a voice interaction process, the text on a screen is read by a user to obtain a voice, the voice may be input a voice assistant and then an operation corresponding to the voice may be performed.

Related methods of implementing "Anything you see can be controlled by voice" are mostly refers to that, scanning text(s) on an interface or a screen to save the scanned text(s), and matching a voice and the saved text(s) in a process of recognizing the voice. Because the recognition engine is not trained by using the text(s) on the interface or screen, the effects of that the recognized voice hits the text on the interface or screen are poor. If there is defects in the pronunciation of the user (such as there is no distinction between 1 and r in the user's pronunciation, there is no distinction between h and f in the user's pronunciation, or there is no distinction between front and back nasal sounds in the user's pronunciation), the effect may be even worse.

### SUMMARY

A method and apparatus for processing a voice recognition result, an electronic device, a computer readable medium, and a computer program product are provided.

In a first aspect, some embodiments of the present invention provide a method for processing a voice recognition result. The method incudes: acquiring push text data corresponding to push information; expanding the push text data to obtain expanded push data; acquiring recognized text data output by a voice assistant, the recognized text data being obtained by performing voice recognition on voice of a user reading the push information; and in response to determining that the recognized text data matches the expanded push data, determining that the recognized text data hits the push information.

In a second aspect, some embodiments of the present invention provide an apparatus for processing a voice recognition result. The apparatus includes: an acquisition unit, configured to acquire push text data corresponding to push information; an obtaining unit, configured to expand the push text data to obtain expanded push data; a recognition unit, configured to acquire recognized text data output by a voice assistant, the recognized text data being obtained by performing voice recognition on voice of a user reading the push information; and a determination unit, configured to determine, in response to determining that the recognized text data matches the expanded push data, that the recognized text data hits the push information.

In a third aspect, some embodiments of the present invention provide an electronic device. The electronic device includes: at least one processor; and a memory, communicatively connected to the at least one processor; where, the memory, storing instructions executable by the at least one processor, the instructions, when executed by the at least one processor, cause the at least one processor to perform the method according to the first aspect.

In a fourth aspect, some embodiments of the present invention provide a non-transitory computer readable storage medium, storing computer instructions, the computer instructions, being used to cause the computer to perform the method according to the first aspect.

In a fifth aspect, some embodiments of the present invention provide a computer program product, comprising a computer program, the computer program, when executed by a processor, implements the method according to the first aspect.

It should be understood that the content described in this section is not intended to identify key or important features of embodiments of the present invention, nor is it intended to limit the scope of the present invention. Other features of the present invention will be easily understood through the following specification.

### BRIEF DESCRIPTION OF THE DRAWINGS

Accompanying drawings are used to better understand the present solution and do not constitute a limitation to the present invention, in which:
Fig. 1 is a flowchart of a method for processing a voice recognition result according to an embodiment of the present invention;
Fig. 2 is a flowchart of a method for obtaining expanded push data according to an embodiment of the present invention;
Fig. 3 is a flowchart of a method for determining whether recognized text data hits push information according to an embodiment of the present invention;
Fig. 4 is a flowchart of a method for processing a voice recognition result according to another embodiment of the present invention;
Fig. 5 is a schematic structural diagram of an apparatus for processing a voice recognition result according to an embodiment of the present invention; and
Fig. 6 is a block diagram of an electronic device used to implement the method for processing a voice recognition result according to an embodiment of the present invention.

### DETAILED DESCRIPTION OF EMBODIMENTS

The following describes exemplary embodiments of the present invention in conjunction with the accompanying drawings, which includes various details of embodiments of the present invention to facilitate understanding, and they should be considered as merely exemplary. Therefore, those of ordinary skill in the art should recognize that various changes and modifications may be made to the embodiments described herein without departing from the scope and spirit of the present invention. Also, for clarity and conciseness, descriptions of well-known functions and structures are omitted in the following description.

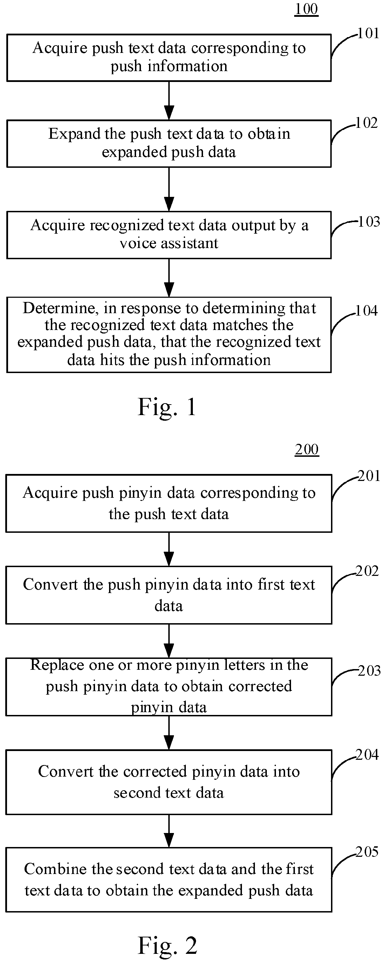

Fig. 1 shows a flow 100 of a method for processing a voice recognition result according to an embodiment of the present invention. The method for processing a voice recognition result includes the following steps:

Step 101, acquiring push text data corresponding to push information.

In the present embodiment, the push information is information pushed to a user. When the contents of the push information are different, the realizable operations corresponding to the push information are different. A display form of the push information may also be different. For example, the push text data corresponding to the push information (for example, the push text data is "jump to a next page") is displayed on an interface, and the user reads the push text data on the interface and sends out voice information. A voice assistant acquires the voice information of the user, and converts the voice information into recognized text data and sends the recognized text data to an executing body on which the method for processing a voice recognition result operates. The executing body obtains the recognized text data and judges whether the recognized text data is the same as the push text data, and if yes, the predefined page is jumped to, and thus the operation corresponding to the push information is realized.

In the present embodiment, the push information may include: information identifier, push text data. The executing body on which the method for processing a voice recognition result operates may acquire the push information in real time, and determine an operation that needs to be performed based on the push information.

Alternatively, the push information may be operation information acquired in real time and displayed on a user interface. The acquiring push text data corresponding to push information includes: acquiring the push information, displaying the push information on the user interface, and converting the push information into the push text data.

Alternatively, the push information may also be operation information preset on a user interface. The acquiring push text data corresponding to push information includes: acquiring the push information preset on the user interface, and converting the push information into the push text data.

Step 102, expanding the push text data to obtain expanded push data.

In the present embodiment, expanding the push text data may expand the data volume of the push text data. Therefore, when being matched with the recognized text data output by the voice assistant, the matching range may be expanded and the user's intention may be deeply understood.

In the present embodiment, expanding the push text data may refers to expending the text of the push text data, or expanding pinyin data of the push text data to obtain mixed data containing text and pinyin obtained.

Alternatively, the expanding the push text data to obtain expanded push data includes: replacing a word or character in the push text data to obtain replaced text data, for example, replace Zhang San with Zhang Ran; and combining the replaced text data and the push text data to obtain the expanded push data.

In some alternative implementations of the present embodiment, the expanding the push text data to obtain expanded push data includes: acquiring push pinyin data corresponding to the push text data; and converting the push pinyin data corresponding to the push text data into the expanded push data.

In this alternative implementation, the push pinyin data of the push text data is first obtained, and then text conversion is performed on the push pinyin data to obtain the expanded push data. The expanded push data increases the data volume of the push text data relative to the push text data, provides a more reliable basis for subsequent matching with the recognized text data of the voice assistant, and may make up for the Chinese mismatch caused by uncommon phrases in the push information.

In some alternative implementations of the present embodiment, the expanding the push text data to obtain expanded push data may also include: acquiring synonymous text data corresponding to the push text data from a preset synonym dictionary; and adding the synonymous text data to the expanded push data.

In this alternative implementation, adding the synonymous text data having the same semantics as the push text data to the expanded push data increases a data volume of the expanded push data, which may make up for the Chinese mismatch due to having the same semantics but different words.

Alternatively, the expanded push data may also include: the push text data and expanded pinyin data, where the expanded pinyin data is pinyin data obtained from the push text, and the expanded pinyin data is related to the push text data. The expanded pinyin data may include: the pinyin data of the push text data (i.e., the push pinyin data).

Alternatively, the expanded push data may also include: the pinyin data of the push text data and corrected pinyin data of the push text data, i.e., the push pinyin data and corrected pinyin data. The corrected pinyin data is pinyin data obtained by replacing one or more letters (e.g., initial consonant of a syllable and/or compound vowel of the syllable) in the push pinyin data.

During scanning the push information on the interface, the executing body, on which the method for processing a voice recognition result operates, maps and saves the push text data (such as "hobble"), the pinyin data of the push text data (i.e., "panshan"), and the corrected pinyin data of the push text data (such as "pansan", "pangshan"). When the user enters the text on the interface by voice, according to the three levels of text data, pinyin data, and corrected pinyin data, they are respectively matched with the recognized text data and the pinyin data of the recognized text data.

Step 103, acquiring recognized text data output by a voice assistant.

Here, the recognized text data is obtained by performing voice recognition on a voice of a user reading the push information.

In the present embodiment, the voice assistant is used to acquire voice information and convert the voice information into text data. After the user reads the push information, the voice assistant acquires a voice of the push information sent by the user, and converts the voice into the recognized text data.

The voice assistant may be a trained voice recognition model, such as a neural network model. The voice recognition model is obtained by training using a large number of annotated voice samples. Inputting the voice of the user to the voice recognition model, and the recognized text data related to the voice of the user output by the voice recognition model is obtained.

In some alternative implementations of the present embodiment, the acquiring recognized text data output by a voice assistant, includes: acquiring a voice of the user reading the push information; and providing the voice to the voice assistant, and acquiring the recognized text data from the voice assistant.

In this alternative implementation, by inputting the acquired voice of the user into the voice assistant, and then the recognized text data corresponding to the voice of the user is acquired from the voice assistant, the reliability of user voice input is ensured and the reliability of the obtained recognized text data is improved.

Step 104, determining, in response to determining that the recognized text data matches the expanded push data, that the recognized text data hits the push information.

In the present embodiment, each data in the recognized text data is compared with each data in the expanded push data one by one. When a piece of recognized text data is same as or similar to a piece of expanded push data (for example, a similarity is greater than 90%), it is determined that the recognized text data matches the expanded push data.

In the present embodiment, the recognized text data hitting the push information indicates that the current situation is "Anything you see can be controlled by voice", an operation related to the push information may be performed. When the recognized text data does not hit the push information indicates that the current situation is not "Anything you see can be controlled by voice".

Alternatively, in response to determining that the recognized text data does not match the expanded push data, determining that the recognized text data does not hit the push information, and no operation is performed.

After the recognized text data hits the push information, the executing body may perform the operation corresponding to the push information. It should be noted that the operation corresponding to the push information is an operation indicated by the push information. For example, the push information includes: opening a web page instruction and a web page URL, and the operation corresponding to the push information refers to directly jumping to the web page corresponding to the web page URL corresponding to the push information.

The method for processing a voice recognition result provided by embodiments of the present invention, first acquiring push text data corresponding to push information; secondly expanding the push text data to obtain expanded push data; then acquiring recognized text data output by a voice assistant, the recognized text data being obtained by performing voice recognition on a voice of a user reading the push information; and finally determining, in response to determining that the recognized text data matches the expanded push data, that the recognized text data hits the push information. Therefore, through expanding the push text data, the expanded push data corresponding to the push information is obtained, and text expansion is performed for the matching between the recognized text data and the expanded push data, which guarantees the comprehensiveness of data when matching with a voice recognition result, and may also effectively solve the problem of a low matching success rate of uncommon words and pronunciation defect groups in "Anything you see can be controlled by voice".

In the present embodiment, the expanded push data may be a variety of text data, and each type of text data may be text obtained by converting or replacing the pinyin data of the push text data. Fig. 2 shows a flowchart 200 of a method for obtaining expanded push data corresponding to push text data according to another embodiment of the present invention. The method for obtaining expanded push data corresponding to push text data includes the following steps:
Step 201, acquiring push pinyin data corresponding to the push text data.

In this alternative implementation, the push text data is a kind of Chinese data, and the push text may be converted into the corresponding push pinyin data using a traditional pinyin conversion tool.

Alternatively, the executing body on which the method for processing a voice recognition result operates may pre-store pinyin data corresponding to a plurality of text data. After obtaining the push text data, the executing body may query the prestored pinyin data to obtain the push pinyin data corresponding to the push text data.

Step 202, converting the push pinyin data into first text data.

In this alternative implementation, the push pinyin data is the pinyin data of the push text data. By converting the push pinyin data into Chinese text, the first text data may be obtained. The first text data is all text data having the same pronunciation (e.g., being composed of same syllables) as the push text, and the first text data includes the push text data.

Step 203, replacing one or more pinyin letters in the push pinyin data to obtain corrected pinyin data.

In this alternative implementation, in order to match and prepare the voice assistant with sufficient to-be-matched data when recognizing some people with defective pronunciation, one or more pinyin letters in the push pinyin data may be replaced to obtain the corrected pinyin data.

In this alternative implementation, the replacing one or more pinyin letters in the push pinyin data includes: by querying a preset replacement table (such as Table 1), an initial consonant and/or a compound vowel in the push pinyin data is replaced to obtain the corrected pinyin data. For example, the initial consonant "l" in the pinyin data "lejin" in Table 1 is replaced with "r" to obtain "rejin", and "rejin" is a kind of corrected pinyin data.

In this alternative implementation, by replacing an initial consonant or a compound vowel, reliable matching data may be prepared for people with defective pronunciation.

**Table 1**

| Pinyin letter(s) | Corrected Pinyin letter(s) | Example |
|---|---|---|
| 1 | r | lejin-rejin |
| r | 1 | huarongdao-hualongdao |
| ch | c | liuche-liuce |
| c | ch | caocao-chaochao |
| sh | s | xiahoushang-xiahousang |
| s | sh | simayi-shimayi |
| z | zh | xiayize-xiayizhe |
| zh | z | zhangsan-zangsan |
| h | f | hushi-fushi |
| f | h | dufu-duhu |
| in | ing | xinqiji-xingqiji |
| ing | in | yingzheng-yinzheng |

Step 204, converting the corrected pinyin data into second text data.

In this alternative implementation, the corrected pinyin data is pinyin data of the second text data, and the second text data may be obtained by converting the corrected pinyin data into Chinese text.

Step 205, combining the second text data and the first text data to obtain the expanded push data.

In this alternative implementation, the expanded push data is a data combination composed of text data, the data combination is mixed with the first text data and the second text data, and the first text data also includes the push text data.

In this alternative implementation, the determining, in response to determining that the recognized text data matches the expanded push data, that the recognized text data hits the push information, includes: determining, in response to determining that the recognized text data respectively matches any one of the second text data or the first text data, that the recognized text data hits the push information.

The method for obtaining expanded push data corresponding to push text data provided by the present embodiment, obtaining the first text data based on the push pinyin data; obtaining the corrected pinyin data through the push pinyin data, converting the corrected pinyin data into the second text data, and combining the second text data and the first text data to obtain the expanded push data. Therefore, the diversity of data in the expanded push data is improved.

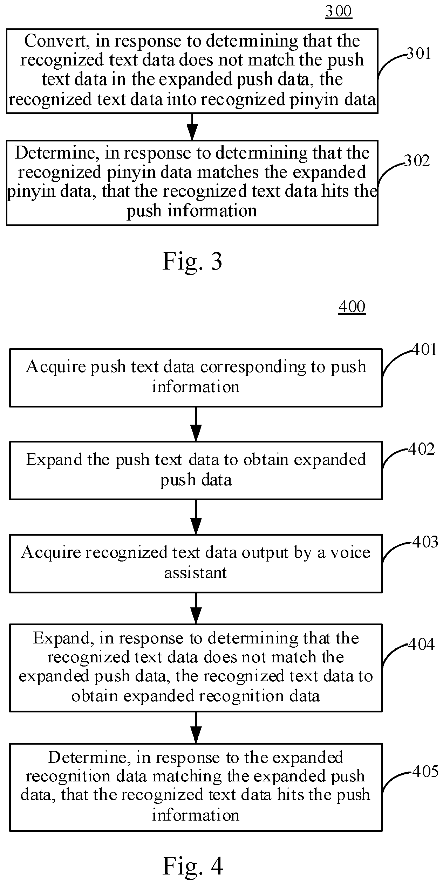

Fig. 3 shows a flowchart 300 of a method for determining whether recognized text data hits push information according to an embodiment of the present invention. The method for determining whether recognized text data hits push information includes the following steps:
Step 301, converting, in response to determining that the recognized text data does not match the push text data in the expanded push data, the recognized text data into recognized pinyin data.

In this alternative implementation, during the matching the recognized text data with the expanded push data, firstly the recognized text data is matched with the push text data in the expanded push data. When each data of the recognized text data is not the same as or similar to any data in the push text data (for example, a similarity between the two is less than 80%), it is determined that the recognized text data does not match the push text data in the expanded push data.

In this alternative implementation, the recognized pinyin data is a pinyin expression of the recognized text data, and a pinyin content of the recognized text is determined based on the recognized pinyin data.

Step 302, determining, in response to determining that the recognized pinyin data matches the expanded pinyin data, that the recognized text data hits the push information.

In this alternative implementation, first, each data in the recognized pinyin data is matched with each data of the expanded pinyin data one by one. If the data in the recognized pinyin data matches any pinyin data of the expanded pinyin data, it is determined that the recognized pinyin data matches the expanded pinyin data.

The method for determining whether recognized text data hits push information provided by this alternative implementation, converts the recognized text data into the recognized pinyin data, and by the matching of the expanded pinyin data and the recognized pinyin data, it is determined that the recognized text data hits the push information, which provides a variety of alternative matching methods for the recognition of the recognized text data, and ensures the effectiveness of the matching of the recognized text data.

In some alternative implementations of the present embodiment, the expanded push data includes: expanded data with different priorities, and the determining, in response to determining that the recognized text data matches the expanded push data, that the recognized text data hits the push information, includes: matching sequentially the recognized text data with each expanded data, based on a priority order of each of the expanded data in the expanded push data; and determining, in response to determining that at least one piece of expanded data in the expanded push data matches the recognized text data, that the recognized text data hits the push information.

In this alternative implementation, the expanded data may be text data, and the expanded data may also be pinyin data, and the expanded push data includes text data and pinyin data, or the expanded push data includes text data. In the expanded push data, the priority of text data is higher than the priority of pinyin data. For different text data, the closer a piece of text data to the push text data, the higher the priority of the piece of text data is. For example, the expanded push data includes: the push text data and the synonymous text data corresponding to the push text, then the priority of the push text data is higher than the priority of the synonymous text data.

Alternatively, when the expanded push data includes: the push text data and the push pinyin data, the priority of the push pinyin data is lower than the priority of the push text data.

Alternatively, when the expanded push data includes: the push text data, the push pinyin data, and the corrected pinyin data, the priority of the push pinyin data is lower than the priority of the push text data, and the priority of the corrected pinyin data is lower than the priority of the push pinyin data.

In this alternative implementation, based on the priority of each of the expanded data in the expanded push data, each expanded data is matched with the recognized text data, thereby ensuring that the data closest to the recognized text is matched first, and ensuring a matching effect of "Anything you see can be controlled by voice".

In an actual example of the present embodiment, the executing body on which the method for processing a voice recognition result operates performs steps as follows: the first step is to scan elements (buttons, text boxes, etc.) on the user interface to obtain the push text data in each element. The second step is to expand, map and save the push text to obtain the expanded push data, the expanded push data includes: the push text data (such as "hobble") and the push pinyin data (i.e., "panshan") of the push text data, the corrected pinyin data (such as "pansan", "pangshan"). The third step, the user inputs an instruction through the voice assistant, and the voice assistant recognizes the instruction to obtain the recognized text data. The fourth step is to perform matching between the recognized text data and the expanded push data at three levels:

1) determining whether the recognized text data R1 matches the push text data in the cached expanded push data (that is, matching the recognized text data with the push text data word by word).

If the recognized text data R1 does not match the push text data in the cached expanded push data, 2) determining whether the pinyin data of the recognized text data R1 matches the push pinyin data in the cached expanded push data.

If the pinyin data of the recognized text data R1 does not match the push pinyin data in the cached expanded push data, 3) determining whether the pinyin data of the recognized text data R1 matches the corrected pinyin data in the expanded push data.

If any one of the matching at three levels 1), 2), and 3) is successfully, then the next level of matching determination will not be performed (for example, if the matching at level 1) is successful, then the matching at level 2) will not be performed), and it is determined that "Anything you see can be controlled by voice". If the three-level matching of 1), 2), and 3) are not matched successfully, it is determined that the recognized text data hits the push information, i.e., "Anything you see can be controlled by voice".

Fig. 4 shows a flow 400 of a method for processing a voice recognition result according to another embodiment of the present invention. The method for processing a voice recognition result includes the following steps:
Step 401, acquiring push text data corresponding to push information.
Step 402, expanding the push text data to obtain expanded push data.
Step 403, acquiring recognized text data output by a voice assistant.

Here, the recognized text data is obtained by performing voice recognition on a voice of a user reading the push information.

It should be understood that the operations and features in steps 401-403 above correspond to the operations and features in steps 101-103, respectively. Therefore, the above description of the operations and features in steps 101-103 is also applicable to steps 401-403, and detailed description thereof will be omitted.

Step 404, expanding, in response to determining that the recognized text data does not match the expanded push data, the recognized text data to obtain expanded recognition data.

In the present embodiment, the expanding the recognized text data to obtain expanded recognition data may include: acquiring recognized pinyin data corresponding to the recognized text data; and converting the recognized pinyin data into the expanded recognition data. In this implementation, the expanded recognition data is text data having the same pronunciation (e.g., being composed of same syllable or syllables) as the recognized text data, and the expanded recognition data includes the recognized text data.

Alternatively, the expanding the recognized text data to obtain expanded recognition data may include: acquiring recognized pinyin data corresponding to the recognized text data; converting the recognized pinyin data into a first candidate text data; replacing an initial consonant or a compound vowel in the recognized pinyin data to obtain substitute pinyin data; converting the substitute pinyin data into a second candidate text data; and combining the first candidate text data and the second candidate text data to obtain the expanded recognition data.

In this alternative implementation, the recognized pinyin data is all pinyin expressions corresponding to the recognized text data; the substitute pinyin data is a pinyin expression obtained by replacing a pinyin letter in the recognized pinyin data. The first candidate text data refers to all Chinese expressions of the recognized pinyin data; and the second candidate text data is all Chinese expressions of the substitute pinyin data.

Alternatively, the expanding the recognized text data to obtain expanded recognition data may include: acquiring recognized pinyin data corresponding to the recognized text data; replacing an initial consonant or a compound vowel in the recognized pinyin data to obtain substitute pinyin data; and combining the recognized text data, the recognized pinyin data, and the substitute pinyin data to obtain the expanded recognition data.

Alternatively, the expanding the recognized text data to obtain expanded recognition data may include: acquiring synonymous text data corresponding to the recognized text data from a preset synonym dictionary, and combining the recognized text data and the synonymous text data corresponding to the recognized text data to obtain the expanded recognition data.

In this alternative implementation, the expanded recognition data includes: the recognized text data and the synonymous text data of the recognized text data.

Step 405, determining, in response to the expanded recognition data matching the expanded push data, that the recognized text data hits the push information.

In the present embodiment, each data in the expanded recognition data is matched with each data in the expanded push data respectively. If a piece of expanded recognition data is same as or similar to a piece of expanded push data, it is determined that the expanded recognition data matches the expanded push data.

In the present embodiment, when the expanded recognition data matches the expanded push data, it indicates that the recognized text acquired by the voice assistant is related to the push text data corresponding to the push information. Therefore, the user's intention is determined, and thus "Anything you see can be controlled by voice" is triggered by voice, therefore, the operation related to the push information is performed.

In the method for processing a voice recognition result provided by the present embodiment, when the recognized text data does not match the expanded push data, the recognized text data is expanded to obtain the expanded recognition data, thus, recognition data of the voice assistant is expanded, a reliable data basis is provided, and the reliability of voice recognition is ensured.

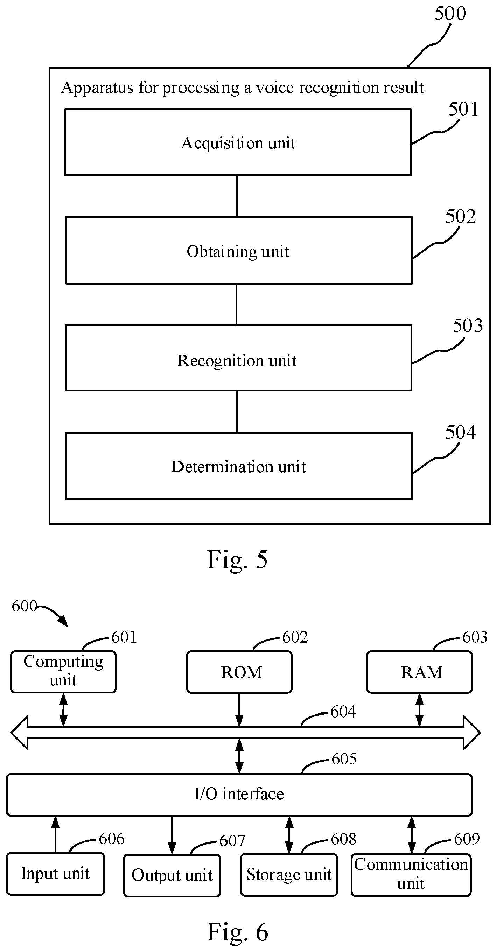

With further reference to Fig. 5, as an implementation of the method shown in the above figures, an embodiment of the present invention provides an apparatus for processing a voice recognition result, and the apparatus embodiment corresponds to the method embodiment as shown in Fig. 1, and the apparatus may be applied to various electronic devices.

As shown in Fig. 5, the apparatus 500 for processing a voice recognition result provided by the present embodiment includes: an acquisition unit 501, an obtaining unit 502, a recognition unit 503 and a determination unit 504. The acquisition unit 501 may be configured to acquire push text data corresponding to push information. The obtaining unit 502 may be configured to expand the push text data to obtain expanded push data. The recognition unit 503 may be configured to acquire recognized text data output by a voice assistant, the recognized text data being obtained by performing voice recognition on a voice of a user reading the push information. The determination unit 504 may be configured to determine, in response to determining that the recognized text data matches the expanded push data, that the recognized text data hits the push information.

In the present embodiment, in the apparatus 500 for processing a voice recognition result: for the detailed processing and the technical effects of the acquisition unit 501, the obtaining unit 502, the recognition unit 503 and the determination unit 504, reference may be made to the relevant descriptions of step 101, step 102, step 103, and step 104 in the embodiment corresponding to Fig. 1 respectively, and detailed description thereof will be omitted.

In some alternative implementations of the present embodiment, the obtaining unit 502 includes: a first acquisition module (not shown in the figures) and a first conversion module (not shown in the figures). The first acquisition module may be configured to acquire push pinyin data corresponding to the push text data. The first conversion module may be configured to convert the push pinyin data corresponding to the push text data into the expanded push data.

In some alternative implementations of the present embodiment, the obtaining unit 502 includes: a second acquisition module (not shown in the figures), a second conversion module (not shown in the figures), a replacement module (not shown in the figures), a third conversion module (not shown in the figures) and a combination module. The second acquisition module may be configured to acquire push pinyin data corresponding to the push text data. The second conversion module may be configured to convert the push pinyin data into first text data. The replacement module may be configured to replace one or more pinyin letters in the push pinyin data to obtain corrected pinyin data. The third conversion module may be configured to convert the corrected pinyin data into second text data. The combination module may be configured to combine the second text data and the first text data to obtain the expanded push data.

In some alternative implementations of the present embodiment, the obtaining unit 502 further includes: a fourth acquisition module (not shown in the figures) and an adding module (not shown in the figures). The fourth acquisition module may be configured to acquire synonymous text data corresponding to the push text data from a preset synonym dictionary. The adding module may be configured to add the synonymous text data to the expanded push data.

In some alternative implementations of the present embodiment, the expanded push data includes: the push text data and expanded pinyin data, and the expanded pinyin data is obtained based on the push text data. The determination unit 504 includes: a recognition module (not shown in the figures) and a determination module (not shown in the figures). The recognition module may be configured to convert, in response to determining that the recognized text data does not match the push text data in the expanded push data, the recognized text data into recognized pinyin data. The determination module may be configured to determine, in response to determining that the recognized pinyin data matches the expanded pinyin data, that the recognized text data hits the push information.

In some alternative implementations of the present embodiment, the expanded push data includes: expanded data with different priorities, and the determination unit 504 includes: a matching module (not shown in the figures) and a hit determination module (not shown in the figures). The matching module may be configured to match sequentially the recognized text data with each expanded data, based on a priority order of each of the expanded data in the expanded push data. The hit determination module may be configured to determine, in response to determining that at least one piece of expanded data in the expanded push data matches the recognized text data, that the recognized text data hits the push information.

In some alternative implementations of the present embodiment, the recognition unit 503 includes: a fifth acquisition module (not shown in the figures) and a provision module (not shown in the figures). The fifth acquisition module may be configured to acquire the voice of the user reading the push information. The provision module may be configured to provide the acquired voice to the voice assistant, and acquire the recognized text data from the voice assistant.

In some alternative implementations of the present embodiment, the apparatus 500 further includes: a discrimination unit (not shown in the figures) and a hit determination unit (not shown in the figures). The discrimination unit may be configured to expand, in response to determining that the recognized text data does not match the expanded push data, the recognized text to obtain expanded recognition data. The hit determination unit may be configured to determine, in response to the expanded recognition data matching the expanded push data, that the recognized text data hits the push information.

The apparatus for processing a voice recognition result provided by embodiments of the present invention, firstly the acquisition unit 501 acquires push text data corresponding to push information; secondly the obtaining unit 502 expands the push text data to obtain expanded push data; then the recognition unit 503 acquires recognized text data output by a voice assistant, the recognized text data being obtained by performing voice recognition on a voice of a user reading the push information; and finally the determination unit 504 determines, in response to determining that the recognized text data matches the expanded push data, that the recognized text data hits the push information. Therefore, through the push text data, the expanded push data corresponding to the push information is obtained, and text expansion is performed for the matching between the recognized text data and the expanded push data, which guarantees the comprehensiveness of data when matching a voice recognition result with the push information, and may also effectively solve the problem of a low matching success rate of uncommon words and pronunciation defect groups in "Anything you see can be controlled by voice".

According to an embodiment of the present invention, an electronic device, a readable storage medium, and a computer program product are provided.

Fig. 6 shows a schematic block diagram of an example electronic device 600 that can be used to implement embodiments of the present invention. The electronic device is intended to represent various forms of digital computers such as a laptop computer, a desktop computer, a workstation, a personal digital assistant, a server, a blade server, a mainframe computer, and other appropriate computers. The electronic device may also represent various forms of mobile apparatuses such as personal digital processing, a cellular telephone, a smart phone, a wearable device and other similar computing apparatuses. The parts shown herein, their connections and relationships, and their functions are only as examples, and not intended to limit the implementations of the present invention as described and/or claimed herein.

As shown in Fig. 6, the device 600 may include a computing unit 601, which may execute various appropriate actions and processes in accordance with a computer program stored in a read-only memory (ROM) 602 or a computer program loaded into a random-access memory (RAM) 603 from a storage unit 608. The RAM 603 may alternatively store various programs and data required by operations of the device 600. The computing unit 601, the ROM 602 and the RAM 603 are connected to each other through a bus 604. An input/output (I/O) interface 605 is also connected to the bus 604.

Multiple components of the device 600 are connected to the I/O interface 605, and include: an input unit 606, such as a keyboard and a mouse; an output unit 607, such as various types of displays and a speaker; a storage unit 608, such as a magnetic disk and an optical disk; and a communication unit 609, such as a network card, a modem and a wireless communication transceiver. The communication unit 609 allows the device 600 to exchange information or data with other devices through a computer network, such as the Internet and/or various telecommunications networks.

The computing unit 601 may be various general-purpose and/or specific-purpose processing components having processing and computing capabilities. Some examples of the computing unit 601 include, but are not limited to, a central processing unit (CPU), a graphics processing unit (GPU), various specific artificial intelligence (AI) computing chips, various computing units running machine learning model algorithms, a digital signal processor (DSP), and any appropriate processor, controller, microcontroller and the like. The computing unit 601 performs various methods and processing described above, such as the method for processing voice recognition result. For example, in some embodiments, the method for processing voice recognition result may be implemented as a computer software program, which is tangibly included in a machine-readable medium, such as the storage unit 608. In some embodiments, part or all of the computer program may be loaded and/or installed on the device 600 through the ROM 602 and/or the communication unit 609. When the computer program is loaded into the RAM 603 and executed by the computing unit 601, one or more steps of the method for processing voice recognition result described above may be performed. Alternatively, in other embodiments, the computing unit 601 may be configured to perform the method for processing voice recognition result in any other appropriate manner (such as through firmware).

The various implementations of the systems and technologies described herein may be implemented in a digital electronic circuit system, an integrated circuit system, a field programmable gate array (FPGA), an application specific integrated circuit (ASIC), an application specific standard product (ASSP), a system-on-chip (SOC), a complex programmable logic device (CPLD), computer hardware, firmware, software and/or combinations thereof. The various implementations may include: being implemented in one or more computer programs, where the one or more computer programs may be executed and/or interpreted on a programmable system including at least one programmable processor, and the programmable processor may be a specific-purpose or general-purpose programmable processor, which may receive data and instructions from a storage system, at least one input device and at least one output device, and send the data and instructions to the storage system, the at least one input device and the at least one output device.

Program codes used to implement the method for processing voice recognition result in embodiments of the invention may be written in any combination of one or more programming languages. These program codes may be provided to a processor or controller of a general-purpose computer, specific-purpose computer or other programmable apparatus for constructing an event library, so that the program codes, when executed by the processor or controller, cause the functions or operations specified in the flowcharts and/or block diagrams to be implemented. These program codes may be executed entirely on a machine, partly on the machine, partly on the machine as a stand-alone software package and partly on a remote machine, or entirely on the remote machine or a server.

In the context of the invention, the machine-readable medium may be a tangible medium that may include or store a program for use by or in connection with an instruction execution system, apparatus or device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any appropriate combination thereof. A more specific example of the machine-readable storage medium may include an electronic connection based on one or more lines, a portable computer disk, a hard disk, a random-access memory (RAM), a read-only memory (ROM), an erasable programmable read-only memory (EPROM or flash memory), an optical fiber, a portable compact disk read-only memory (CD-ROM), an optical storage device, a magnetic storage device, or any appropriate combination thereof.

To provide interaction with a user, the systems and technologies described herein may be implemented on a computer having: a display device (such as a CRT (cathode ray tube) or LCD (liquid crystal display) monitor) for displaying information to the user; and a keyboard and a pointing device (such as a mouse or a trackball) through which the user may provide input to the computer. Other types of devices may also be used to provide interaction with the user. For example, the feedback provided to the user may be any form of sensory feedback (such as visual feedback, auditory feedback or tactile feedback); and input from the user may be received in any form, including acoustic input, speech input or tactile input.

The systems and technologies described herein may be implemented in: a computing system including a background component (such as a data server), or a computing system including a middleware component (such as an application server), or a computing system including a front-end component (such as a user computer having a graphical user interface or a web browser through which the user may interact with the implementations of the systems and technologies described herein), or a computing system including any combination of such background component, middleware component or front-end component. The components of the systems may be interconnected by any form or medium of digital data communication (such as a communication network). Examples of the communication network include a local area network (LAN), a wide area network (WAN), and the Internet.

A computer system may include a client and a server. The client and the server are generally remote from each other, and generally interact with each other through the communication network. A relationship between the client and the server is generated by computer programs running on a corresponding computer and having a client-server relationship with each other.

In the technical solution of the present invention, the acquisition, storage, and application of user personal information involved are in compliance with relevant laws and regulations, and does not violate public order and good customs.

It should be appreciated that the steps of reordering, adding or deleting may be executed using the various forms shown above. For example, the steps described in embodiments of the invention may be executed in parallel or sequentially or in a different order, so long as the expected results of the technical solutions provided in embodiments of the invention may be realized, and no limitation is imposed herein.

The above specific implementations are not intended to limit the scope of the invention. It should be appreciated by those skilled in the art that various modifications, combinations, sub-combinations, and substitutions may be made depending on design requirements and other factors. Any modification, equivalent and modification that fall within the spirit and principles of the invention are intended to be included within the scope of the invention.

## Claims

1. A method for processing a voice recognition result, the method comprising:
acquiring (101, 401) push text data corresponding to push information;
expanding (102, 402) the push text data to obtain expanded push data;
acquiring (103, 403) recognized text data output by a voice assistant, the recognized text data being obtained by performing voice recognition on voice of a user reading the push information; and
in response to determining that the recognized text data matches the expanded push data, determining (104) that the recognized text data hits the push information.

2. The method according to claim 1, wherein the expanding (102) the push text data to obtain expanded push data, comprises:
acquiring push pinyin data corresponding to the push text data; and
converting the push pinyin data corresponding to the push text data into the expanded push data.

3. The method according to claim 1, wherein the expanding (102) the push text data to obtain expanded push data, comprises:
acquiring (201) push pinyin data corresponding to the push text data;
converting (202) the push pinyin data into first text data;
replacing (203) one or more pinyin letters in the push pinyin data to obtain corrected pinyin data;
converting (204) the corrected pinyin data into second text data; and
combining (205) the second text data and the first text data to obtain the expanded push data.

4. The method according to claim 2 or 3, wherein the expanding (102) the push text data to obtain expanded push data, comprises:
acquiring synonymous text data corresponding to the push text data from a preset synonym dictionary; and
adding the synonymous text data to the expanded push data.

5. The method according to claim 1, wherein the expanded push data comprises: the push text data and expanded pinyin data, and the expanded pinyin data is obtained based on the push text data, the determining (104), in response to determining that the recognized text data matches the expanded push data, that the recognized text data hits the push information, comprises:
in response to determining that the recognized text data does not match the push text data in the expanded push data, converting (301) the recognized text data into recognized pinyin data; and
in response to determining that the recognized pinyin data matches the expanded pinyin data, determining (302) that the recognized text data hits the push information.

6. The method according to claim 1, wherein the expanded push data comprises: expanded data with different priorities, and the determining (104), in response to determining that the recognized text data matches the expanded push data, that the recognized text data hits the push information, comprises:
matching sequentially the recognized text data with each expanded data, based on a priority order of each of the expanded data in the expanded push data; and
in response to determining that at least one piece of expanded data in the expanded push data matches the recognized text data, determining that the recognized text data hits the push information.

7. The method according to any one of claims 1-6, wherein the acquiring (103, 403) recognized text data output by a voice assistant, comprises:
acquiring the voice of the user reading the push information; and
providing the acquired voice to the voice assistant, and acquiring the recognized text data from the voice assistant.

8. The method according to claim 7, wherein the method further comprises:
in response to determining that the recognized text data does not match the expanded push data, expending (404) the recognized text to obtain expanded recognition data; and
in response to the expanded recognition data matching the expanded push data, determining (405) that the recognized text data hits the push information.

9. An electronic device, comprising:
at least one processor; and
a memory, communicatively connected to the at least one processor; wherein,
the memory, storing instructions executable by the at least one processor, the instructions, when executed by the at least one processor, cause the at least one processor to perform the method according to any one of claims 1-8.

10. A non-transitory computer readable storage medium, storing computer instructions, the computer instructions, when executed by a processor, cause the processor to perform the method according to any one of claims 1-8.

11. A computer program product, comprising a computer program, the computer program, when executed by a processor, implements the method according to any one of claims 1-8.
